# EUROPEAN PATENT APPLICATION

(11) **EP 4 398 355 A1**
(43) Date of publication of application: **10.07.2024**
(21) Application number: 23208775.9
(22) Date of filing: 09.11.2023
(51) Int. Cl.: H01M 10/04, H01M 50/109, H01M 50/153, H01M 50/169, H01M 50/171, H01M 50/181, H01M 50/186

(54) **BUTTON CELL**

(30) Priority: 06.01.2023 KR 20230002444
(71) Applicant: Samsung SDI Co., Ltd., Yongin-si, Gyeonggi-do 17084 (KR)
(72) Inventor: Kim, Dae-Sup, 17084 Yongin-si, Gyeonggi-do (KR)
(74) Representative: Gulde & Partner

(57) **Abstract**

A button cell includes an electrode assembly, a case including an opening exposing the electrode assembly, a cap plate coupled to the case to cover an outer region of the opening and including a through hole exposing a central region of the opening, and a step portion recessed to correspond to a sidewall of the case and in which the sidewall of the case is inserted, a terminal plate connected to the second electrode tab, insulatively bonded to the cap plate, and covering the through hole, a bonding layer between the cap plate and the terminal plate and insulatively bonding between the cap plate and the terminal plate, and a side welded portion between the step portion of the cap plate and the sidewall of the case.

## Description

### BACKGROUND

### 1. Field

Aspects of embodiments of the present disclosure relate to a button cell.

### 2. Description of the Related Art

In general, a rechargeable battery is a battery that can be charged and discharged.

Recently, as a demand for wearable devices, such as headphones, earphones, smartwatches, and body-attached medical devices using wireless communication such as Bluetooth increases, a need for a button cell, which is a micro-sized rechargeable battery mounted in a wearable device, is increasing.

Such a button cell accommodates an electrode assembly, and includes a case connected to a first electrode of the electrode assembly, a cap plate welded to the case, and a terminal plate insulated and bonded to the cap plate by a bonding layer and connected to a second electrode of the electrode assembly.

However, a conventional button cell may be configured including the cap plate and the terminal plate such that a welded portion between the case and the cap plate is positioned at an upper portion of the button cell, and thus a bonding layer to prevent a short circuit between the cap plate and the terminal plate may be difficult to overlap the welded portion.

The above information disclosed in this Background section is provided for enhancement of understanding of the background of the disclosure, and, therefore, it may contain information that does not form the prior art that is already known in this country to a person of ordinary skill in the art.

### SUMMARY

According to an aspect of embodiments of the present disclosure, a button cell is provided in which a short circuit between a cap plate and a terminal plate is prevented or substantially prevented by positioning a side welded portion between a case and the cap plate at a side of the button cell.

According to another aspect of embodiments of the present disclosure, a button cell is provided in which welding between a case and a cap plate is easily performed and interference of a side welded portion is suppressed.

In an aspect of the present disclosure there is provided a button cell which includes an electrode assembly configured to include a first electrode, a second electrode, a separator positioned between the first electrode and the second electrode, a first electrode tab extending from the first electrode, and a second electrode tab extending from the second electrode. Further, the button cell includes a case connected to the first electrode tab and accommodating the electrode assembly and including an opening exposing the electrode assembly. Further, the button cell includes a cap plate coupled to the case to cover an outer region of the opening and including a through hole exposing a central region of the opening. Said cap plate further includes a step portion recessed to correspond to a sidewall of the case and in which the sidewall of the case is inserted. Further, the button cell includes a terminal plate connected to the second electrode tab, insulatively bonded to the cap plate, and covering the through hole. Further, the button cell includes a bonding layer between the cap plate and the terminal plate and insulatively bonding between the cap plate and the terminal plate. Further, the button cell includes a side welded portion between the step portion of the cap plate and the sidewall of the case. This has the advantage that the side welded portion does not cause problems, such as delamination of the bonding layer and consequently short circuits, with the bonding layer being arranged between the cap plate and the terminal plate, since the welded portion does not directly contact the bonding layer.

The bonding layer may protrude from the terminal plate toward the step portion of the cap plate.

The protrusion of the bonding layer may overlap the step portion. Preferably, the bonding layer overlaps the step portion, which provides additional electric insulation between cap plate and the terminal plate and additional structural stability of the button cell in VD direction. In other words, the bonding layer may overlap the step portion of the cap plate on the front surface of the cap plate. In that context, a front surface of the step portion may correspond to the front surface of the cap plate.

The case may further include a first welding groove recessed from an outer surface of the sidewall corresponding to the step portion, which advantageously prevents damage of e.g. the bonding layer, when the side welded portion between the step portion and the sidewall of the case is formed in a welding process. In other words, the case may further include a first welding groove defined by a recess in the outer surface of the sidewall of the case and the step portion of the cap plate.

The side welded portion may be positioned inside the first welding groove. In other words, the side welded portion may be accessible from inside the first welding groove.

The cap plate may further include a second welding groove recessed from a surface of an edge of the cap plate corresponding to the step portion to communicate with the first welding groove, which advantageously prevents damage of e.g. the bonding layer, when the side welded portion between the step portion and the sidewall of the case is formed in a welding process. In other words, the button cell may further include a second welding groove defined by a recess in the surface of an edge of the cap plate belonging to the step portion, which is in communication with a recess in the outer surface of the sidewall of the case.

The side welded portion may be positioned inside the first welding groove and the second welding groove. In other words, the side welded portion may be accessible from inside the second welding groove.

The cap plate may further include a third welding groove recessed from a surface of an edge of the cap plate, which advantageously prevents damage of e.g. the bonding layer, when the side welded portion between the step portion and the sidewall of the case is formed in a welding process. In other words, the cap plate may further include a third welding groove defined by a recess in a surface of an edge of the cap plate belonging to the step portion and the sidewall of the case.

The side welded portion may be positioned inside the third groove. In other words, the side welded portion may be accessible from inside the third welding groove.

The step portion may be recessed from a rear surface of the cap plate.

The bonding layer may be on a front surface of the cap plate.

The terminal plate may include a flange portion covering the through hole and contacting the bonding layer, and a protrusion extending through the through hole from the flange portion and connected to the second electrode tab.

The bonding layer may contact the flange portion, and the bonding layer may not contact the protrusion.

The case and the cap plate may have a same polarity as that of the first electrode, and the terminal plate may have a same polarity as that of the second electrode.

A ratio (height/diameter) of a height to a diameter of the button cell may be 1 or less.

According to an aspect of one or more embodiments, a button cell is provided in which a short circuit between a cap plate and a terminal plate may be prevented or substantially prevented by positioning a side welded portion between a case and the cap plate at a side of the button cell.

In addition, a button cell is provided in which welding between a case and a cap plate is easily performed and interference of a side welded portion is suppressed.

### BRIEF DESCRIPTION OF THE DRAWINGS

FIG. 1 illustrates a perspective view showing a button cell according to an embodiment.
FIG. 2 illustrates a cross-sectional view taken along the line II-II of FIG. 1.
FIG. 3 illustrates an enlarged view of a region "A" of FIG. 2.
FIG. 4 illustrates a cross-sectional view showing a portion of a button cell corresponding to the region "A" of FIG. 2, according to another embodiment.
FIG. 5 illustrates a cross-sectional view showing a portion of a button cell corresponding to the region "A" of FIG. 2, according to another embodiment.
FIG. 6 illustrates a cross-sectional view showing a portion of a button cell corresponding to the region "A" of FIG. 2, according to another embodiment.

### DETAILED DESCRIPTION

The present disclosure will be described more fully herein with reference to the accompanying drawings, in which some embodiments of the disclosure are shown. As those skilled in the art would realize, the described embodiments may be modified in various different ways, all without departing from the scope of the present disclosure.

In addition, unless explicitly described to the contrary, it is to be understood that terms such as "comprises," "includes," or "have" used in the present specification specify the presence of stated features, numerals, steps, operations, components, parts, or a combination thereof, but do not preclude the presence or addition of one or more other features, numerals, steps, operations, components, parts, or a combination thereof.

Also, in this specification, it is to be understood that when one component is referred to as being "connected" or "coupled" to another component, it may be connected or coupled directly to the other component or connected or coupled to another component with one or more other components intervening therebetween.

Singular forms are to include plural forms unless the context clearly indicates otherwise.

It is to be understood that, although the terms "first," "second," etc. may be used herein to describe various elements, these elements should not be limited by these terms. These terms are used to distinguish one element from another. For example, a first element could be termed a "second" element, and, similarly, a second element could be termed a "first" element, without departing from the scope of example embodiments of the inventive concept. The terms of a singular form may include plural forms unless the context clearly indicates otherwise.

In addition, terms such as "below," "lower," "above," "upper," and the like are used to describe the relationship of the configurations shown in the drawings. However, the terms are used as a relative concept and are described with reference to the direction indicated in the drawings.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

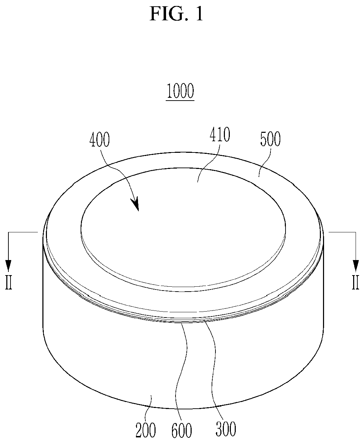

Herein, a button cell according to an embodiment will be described with reference to FIG. 1 to FIG. 3.

A button cell according to an embodiment, which is a micro secondary battery, may include a coin cell, but the present disclosure is not limited thereto, and may include a cylindrical or pin-type battery.

Herein, a button cell, which may be a battery in the form of a thin coin or button, may indicate a battery having a height-to-diameter ratio (height/diameter) of 1 or less, but the present disclosure is not limited thereto. The button cell is preferably (mainly) cylindrical, such that a horizontal cross-section thereof is circular, but the present disclosure is not limited thereto, and the horizontal cross-section may have an oval or polygonal shape. In this case, a diameter may indicate a maximum distance based on a horizontal direction of the battery, and a height may indicate a maximum distance (distance from a flat bottom surface to a flat top surface) based on a vertical direction of the battery.

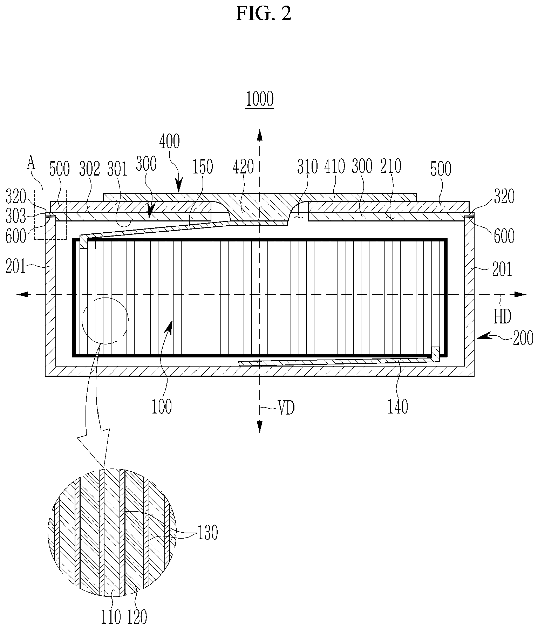

FIG. 1 illustrates a perspective view showing a button cell according to an embodiment; and FIG. 2 illustrates a cross-sectional view taken along the line II-II of FIG. 1.

Referring to FIG. 1 and FIG. 2, a button cell 1000 according to an embodiment, which is a rechargeable battery capable of charging and discharging, includes an electrode assembly 100, a case 200, a cap plate 300, a terminal plate 400, a bonding layer 500, and a side welded portion 600.

The electrode assembly 100 is accommodated in the case 200. A lower portion of the electrode assembly 100 faces a bottom portion of the case 200, and an upper portion of the electrode assembly 100 faces the terminal plate 400 and the cap plate 300 covering an opening 210 of the case 200. In an embodiment, upper and lower portions of the electrode assembly 100 may have planes parallel to each other, but the present disclosure is not limited thereto.

The electrode assembly 100 includes a first electrode 110, a second electrode 120, a separator 130, a first electrode tab 140, and a second electrode tab 150.

The first electrode 110 and the second electrode 120 are spaced apart from each other, and a separator 130 including an insulating material is positioned between the first electrode 110 and the second electrode 120. In an embodiment, the first electrode 110 may be an anode, and the second electrode 120 may be a cathode, but the present disclosure is not limited thereto, and, in another embodiment, the first electrode 110 may be the cathode, and the second electrode 120 may be the anode.

In an embodiment, the first electrode 110 has a band shape extending in a direction, and includes an anode coated region, which is an area where an anode active material layer is applied to a current collector of a metal foil (e.g., a Cu foil), and an anode uncoated region, which is a region where no active material is applied. The anode uncoated region may be positioned at an end of the first electrode 110 in an extension direction.

In an embodiment, the second electrode 120 has a band shape extending in a direction while being spaced apart from the first electrode 110 with the separator 130 provided therebetween, and includes a cathode coated region, which is a region where a cathode active material layer is applied to a current collector of a metal foil (e.g., an Al foil), and a cathode uncoated region, which is a region where no active material is applied. The cathode uncoated region may be positioned at an end of the second electrode 120 in an extension direction.

The separator 130 extends in a direction between the first electrode 110 and the second electrode 120 to prevent or substantially prevent a short circuit between the first electrode 110 and the second electrode 120.

In an embodiment, the first electrode 110, the separator 130, and the second electrode 120 are sequentially stacked and wound to have a jelly roll shape with a vertical direction VD as a center thereof, but the present disclosure is not limited thereto, and the first electrode 110, the separator 130, and the second electrode 120 may be formed in any of various known shapes. Herein, the vertical direction VD includes, but is not limited to, a thickness direction of the button cell 1000.

The first electrode tab 140 extends from the first electrode 110 of the electrode assembly 100 to a bottom portion of the case 200. The first electrode tab 140 is coupled to the bottom portion of the case 200 to connect the first electrode 110 and the case 200. The first electrode tab 140 is in contact with the first electrode 110 and the case 200. The first electrode tab 140 may be welded to the bottom portion of the case 200, but the present disclosure is not limited thereto, and the first electrode tab 140 may be in contact with the bottom portion of the case 200. In an embodiment, the case 200 and the cap plate 300 have a same polarity as that of the first electrode 110 by the first electrode tab 140.

The second electrode tab 150 extends from the second electrode 120 of the electrode assembly 100 to the terminal plate 400. In an embodiment, the second electrode tab 150 is coupled to a protrusion 420 of the terminal plate 400 to connect the second electrode 120 and the terminal plate 400. The second electrode tab 150 is in contact with the second electrode 120 and the terminal plate 400. The second electrode tab 150 may be welded to a surface of the protrusion 420 of the terminal plate 400, but the present disclosure is not limited thereto, and may come into contact with the surface of the protrusion 420. The terminal plate 400 has a same polarity as that of the second electrode 120 by the second electrode tab 150.

In an embodiment, a center pin penetrating a center of the electrode assembly 100 in the vertical direction VD may be positioned at a central portion of the electrode assembly 100, and the center pin may support the first electrode tab 140 and the second electrode tab 150, but the present disclosure is not limited thereto.

The case 200 is connected to the first electrode 110 of the electrode assembly 100 and accommodates the electrode assembly 100. The case 200 includes an opening 210 exposing the upper portion of the electrode assembly 100. The opening 210 of the case 200 may be formed by a sidewall 201 that is bent or extends in the vertical direction VD from the bottom portion of the case 200 to extend, but the present disclosure is not limited thereto. As the bottom portion of the case 200 is welded to the first electrode tab 140 to be connected to the first electrode 110 of the electrode assembly 100, the case 200 may have a same polarity as that of the first electrode 110. In a embodiment, the case 200 has a cylindrical can shape for accommodating the electrode assembly 100 having a form of a jelly roll, but the present disclosure is not limited thereto, and may have any of various known shapes. The case 200 may accommodate any of various known electrolyte solutions together with the electrode assembly 100. An outer surface of the case 200 and an outer surface of the cap plate 300 may be a first electrode terminal of the button cell 1000, but the present disclosure is not limited thereto. In an embodiment, an upper surface of a flange portion 410, which is an outer surface of the terminal plate 400, may be a second electrode terminal of the button cell 1000, but the present disclosure is not limited thereto. In an embodiment, a plating layer may be coated on an outer surface of the case 200, but the present disclosure is not limited thereto, and any of various well-known coating layers may be coated on the outer surface of the case 200. In an embodiment, the case 200 may include stainless steel, but the present disclosure is not limited thereto, and may include any of various known metals.

The opening 210 of the case 200 is covered by the cap plate 300 and the terminal plate 400.

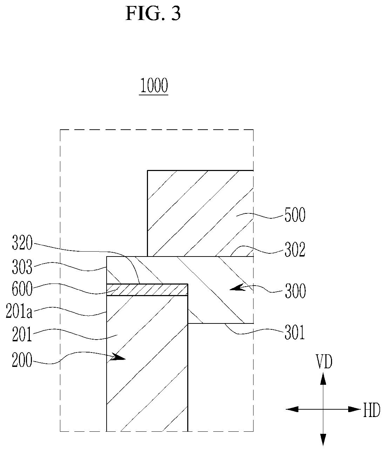

FIG. 3 illustrates an enlarged view of a region "A" of FIG. 2.

Referring to FIG. 3 and FIG. 2, the cap plate 300 is coupled to the case 200 to cover an outer area of the opening 210. In an embodiment, the cap plate 300 includes a through hole 310 exposing a central region of the opening 210 and a step portion 320 welded to the sidewall 201 of the case 200.

The through hole 310 is covered by the terminal plate 400, and the protrusion 420 of the terminal plate 400 extends through the through hole 310 to face the electrode assembly 100 accommodated in the case 200.

The step portion 320 is recessed to correspond to the sidewall 201 of the case 200. The step portion 320 of the cap plate may have a thinner thickness in vertical direction VD compared to the thickness in vertical direction VD of the cap plate 300. The step portion 320 of the cap plate may have a length in horizontal direction HD, which corresponds to the thickness of the sidewall 201 of the case 200 in horizontal direction HD. The step portion 320 may be recessed from a rear surface 301 of the cap plate 300 facing the electrode assembly 100. In an embodiment, the step portion 320 is recessed in a ring shape in a plan view along an edge 303 of the cap plate 300, but the present disclosure is not limited thereto. The sidewall 201 of the case 200 is inserted into the step portion 320. In an embodiment, as the sidewall 201 of the case 200 is inserted into the step portion 320, the edge 303 of the cap plate 300 covers (e.g., completely covers) the sidewall 201 of the case 200 in the vertical direction VD. The sidewall 201 of the case 200 is inserted into the step portion 320 of the cap plate 300 to allow the edge 303 of the cap plate 300 to cover (e.g., completely cover) the sidewall 201 of the case 200 in the vertical direction VD, and, thus, the sidewall 201 of the case 200 does not protrude in a horizontal direction HD, which is outside the edge 303 of the cap plate 300. Accordingly, the sidewall 201 of the case 200 is suppressed from being interfered with by another external element. Herein, the horizontal direction HD is a direction crossing the vertical direction VD and is a radial direction of the button cell 1000.

The step portion 320 and the sidewall 201 are directly coupled by the side welded portion 600 formed by a side welding process using a welding means such as a laser beam irradiated in the horizontal direction HD in a state in which the sidewall 201 of the case 200 is inserted into the step portion 320 of the cap plate 300. The step portion 320 of the cap plate 300 and the sidewall 201 of the case 200 are directly coupled by the side welded portion 600, and, thus, an outer area of the opening 210 of the case 200 is covered by the cap plate 300. In an embodiment, the cap plate 300 has a ring shape by the through-hole 310 formed in the center, but the present disclosure is not limited thereto. The cap plate 300 is coupled to the case 200 by the side welded portion 600 to have a same polarity as that of the first electrode 110. Accordingly, the cap plate 300 and the case 200 have the same polarity as that of the first electrode 110. The outer surface of the cap plate 300 may be a first electrode terminal of the button cell 1000, but the present disclosure is not limited thereto. The cap plate 300 is insulatingly bonded to the terminal plate 400 with the bonding layer 500 positioned on a front surface 302 of the cap plate 300, which is opposite to the rear surface 301 of the cap plate 300, provided therebetween. In an embodiment, the cap plate 300 includes stainless steel, but the present disclosure is not limited thereto, and the cap plate 300 may include any of various known metals.

The terminal plate 400 is connected to the second electrode 120 to be insulated from and bonded to the cap plate 300 by the bonding layer 500. The terminal plate 400 covers the through hole 310 of the cap plate 300. The terminal plate 400 is positioned on the front surface 302 of the cap plate 300. The terminal plate 400 covers a central area of the opening 210 of the case 200 exposed by the through hole 310 of the cap plate 300. Since the terminal plate 400 covers the central area of the opening 210 and the cap plate 300 covers an outer area of the opening 210, the opening 210 of the case 200 is completely covered by the terminal plate 400 and the cap plate 300. The terminal plate 400 firmly seals the electrode assembly 100 together with the case 200, the cap plate 300, and the bonding layer 500. The terminal plate 400 is coupled to the second electrode tab 150 of the electrode assembly 100 to be connected to the second electrode 120 of the electrode assembly 100. The terminal plate 400 has a same polarity as that of the second electrode 120.

In an embodiment, the terminal plate 400 includes the flange portion 410 and the protrusion 420.

The flange portion 410 is positioned on the cap plate 300, and overlaps the cap plate 300 to cover the through hole 310. The flange portion 410 has a larger area than that of the protrusion 420. The flange portion 410 may have a larger diameter than that of the protrusion 420. In an embodiment, the flange portion 410 has a thinner thickness than that of the protrusion 420, but the present disclosure is not limited thereto. A rear surface of the flange portion 410 contacts the bonding layer 500, and the flange portion 410 is insulatively bonded to the cap plate 300 by the bonding layer 500. A front surface of the flange portion 410 may be a second electrode terminal of the button cell 1000.

The protrusion 420 protrudes from the flange portion 410 to extend through the through hole 310. The protrusion 420 is connected to the second electrode 120 through the through hole 310 from the flange portion 410. A surface of the protrusion 420 is coupled to the second electrode tab 150. The surface of the protrusion 420 may be welded to the second electrode tab 150, but the present disclosure is not limited thereto. As the protrusion 420 is coupled to the second electrode tab 150, the protrusion 420 and the flange portion 410 of the terminal plate 400 have a same polarity as that of the second electrode 120. The surface of the protrusion 420 coupled with the second electrode tab 150 may have a smaller diameter than that of the front surface of the flange portion 410, which may be an electrode terminal. In an embodiment, the protrusion 420 and the flange portion 410 are integrally formed using a forging process, but the present disclosure is not limited thereto, and different materials may be combined to form the terminal plate 400.

A plating layer may be coated on the outer surface of the terminal plate 400, but the present disclosure is not limited thereto, and various known coating layers may be coated on the outer surface of the terminal plate 400. In an embodiment, the terminal plate 400 includes aluminum, but the present disclosure is not limited thereto, and the terminal plate 400 may include any of various known metals.

The bonding layer 500 is positioned between the cap plate 300 and the flange portion 410 of the terminal plate 400. The bonding layer 500 insulates and bonds between the cap plate 300 and the terminal plate 400. The bonding layer 500 protrudes from the terminal plate 400 toward the step portion 320 of the cap plate 300. The bonding layer 500 protrudes in the horizontal direction HD from between the cap plate 300 and the terminal plate 400 to be exposed on the front surface 302 of the cap plate 300. The bonding layer 500 protrudes from the terminal plate 400 in the horizontal direction HD, which is a direction of the step portion 320 of the cap plate 300, and overlaps the step portion 320 in the vertical direction VD. In an embodiment, the bonding layer 500 is positioned only on the front surface 302 of the cap plate 300, and is not positioned on the rear surface 301 of the cap plate 300. In an embodiment, the bonding layer 500 contacts the flange portion 410 of the terminal plate 400, and does not contact the protrusion 420 of the terminal plate 400. The bonding layer 500 protrudes from the terminal plate 400 toward the step portion 320 of the cap plate 300 to overlap the step portion 320, to prevent or substantially prevent a short circuit between the terminal plate 400 and the cap plate 300 having different polarities.

The bonding layer 500 may include an insulating material and insulates between the cap plate 300 and the terminal plate 400. In other words, the bonding layer is (electrically) insulative and positioned between the cap plate and the terminal plate, and is configured to bind the cap plate and the terminal plate. In an embodiment, the bonding layer 500 is thermally fused between the cap plate 300 and the flange portion 410 of the terminal plate 400 by using heat or a laser beam. Preferably, the bonding layer 500 includes, but is not limited to, polypropylene, polyimide, etc., and may include any of various known resins for insulative bonding between the cap plate 300 and the terminal plate 400. As the bonding layer 500 bonds between the cap plate 300 and the terminal plate 400, the opening 210 of the case 200 in which the electrode assembly 100 is accommodated is completely sealed by the cap plate 300, the terminal plate 400, and the bonding layer 500. In a state in which the terminal plate 400 is bonded to the cap plate 300 by the bonding layer 500, the cap plate 300 is side-welded to the case 200 in which the electrode assembly 100 is accommodated, and, thus, the case 200 and the cap plate 300 are welded by the side welded portion 600.

For example, the bonding layer 500 may include a thermosetting resin and a thermoplastic resin. The thermosetting resin and the thermoplastic resin of the bonding layer 500 may be stacked to include a plurality of layers, but the present disclosure is not limited thereto. The thermosetting resin of the bonding layer 500 is cured by heat, and may include any of various known thermosetting resins, such as a phenol resin, a urea resin, a melamine resin, an epoxy resin, and a polyester resin. The thermoplastic resin of the bonding layer 500 includes, but is not limited to, a polypropylene resin that melts at a certain temperature (e.g., a predetermined temperature), and may include any of various known thermoplastic resins, such as polystyrene, polyethylene, and a polyvinyl chloride resin.

The side welded portion 600 welds and couples the cap plate 300 and the case 200. The annular side welded portion 600 welds between the step portion 320 of the cap plate 300 and the sidewall 201 of the case 200 inserted into the step portion 320. The side welded portion 600 is formed between the step portion 320 of the cap plate 300 and the sidewall 201 of the case 200 by using a welding means, such as a laser beam, irradiated in the horizontal direction HD. In an embodiment, the side welded portion 600 has a circular ring shape along a planar shape of the step portion 320 of the cap plate 300 and the sidewall 201 of the case 200, but the present disclosure is not limited thereto, and, corresponding to planar shapes of the step portion 320 of the cap plate 300 and the sidewall 201 of the case 200, the side welded portion 600 may have any of various ring shapes, such as a polygonal shape, an elliptical shape, or a closed loop shape.

The side welded portion 600 formed by a side welding process in which a welding means, such as a laser beam, is irradiated along the horizontal direction HD to an outer surface 201a of the sidewall 201 of the case 200, and even when the bonding layer 500 disposed on the front surface 302 of the cap plate 300 overlaps the step portion 320 of the cap plate 300 in the vertical direction VD, when the side welded portion 600 is formed, interference by the side welded portion 600 does not occur in the bonding layer 500 and interference with the side welded portion 600 does not occur by the bonding layer 500. That is, welding between the case 200 and the cap plate 300 is easily performed by the side welded portion 600 and interference by the side welded portion 600 is suppressed.

As described above, in the button cell 1000 according to an embodiment, the side welded portion 600 welding between the case 200 and the cap plate 300 is positioned at a side of the button cell 1000, and, thus, the bonding layer 500 protrudes from the terminal plate 400 toward the step portion 320 of the cap plate 300 and overlaps the step portion 320, such that a short circuit between the terminal plate 400 and the cap plate 300 having different polarities, welding between the case 200 and the cap plate 300 is easily performed by the side welded portion 600, and interference between the side welded portion 600 and the bonding layer 500 is suppressed.

That is, a short circuit between the cap plate 300 and the terminal plate 400 is prevented or substantially prevented by the bonding layer 500, and the button cell 1000 in which interference between the side welded portion 600 performing welding between the case 200 and the cap plate 300 and the bonding layer 500 is suppressed is provided.

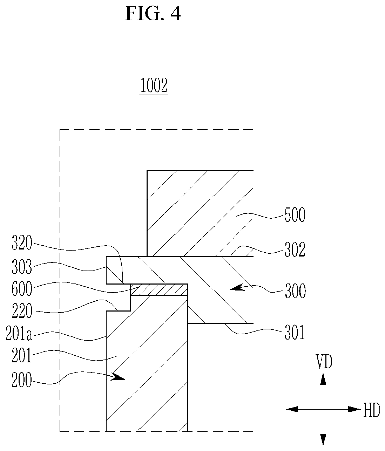

Herein, a button cell according to another embodiment will be described with reference to FIG. 4.

Herein, a button cell according to another embodiment will be described with respect to differences from the button cell according to the above-described embodiment.

FIG. 4 illustrates a cross-sectional view showing a portion of a button cell corresponding to the region "A" of FIG. 2, according to another embodiment.

Referring to FIG. 4, a case 200 of a button cell 1002 according to another embodiment includes a first welding groove 220.

The first welding groove 220 is recessed from the outer surface 201a of the sidewall 201 of the case 200 corresponding to the step portion 320 of the cap plate 300. The first welding groove 220 is recessed in the horizontal direction HD from the outer surface 201a of the sidewall 201 of the case 200.

The side welded portion 600 is positioned inside the first welding groove 220. The side welded portion 600 welds between the step portion 320 of the cap plate 300 and the sidewall 201 of the case 200 inside the first welding groove 220.

The side welded portion 600 welding between the step portion 320 of the cap plate 300 and the sidewall 201 of the case 200 is positioned inside the first welding groove 220 of the case 200 recessed from the outer surface 201a of the side wall 201 of the case 200, and, thus, during a side welding process, an area to be welded by the first welding groove 220 may be easily checked, such that welding between the case 200 and the cap plate 300 may be easily performed by the side welded portion 600, and even when the side welded portion 600 protrudes from an inside of the first welding groove 220 by the welding process, external interference is suppressed.

As described above, in the button cell 1002 according to an embodiment, the side welded portion 600 welding between the case 200 and the cap plate 300 is positioned inside the first welding groove 220 positioned at a side of the button cell 1002, and, thus, the bonding layer 500 protrudes from the terminal plate 400 toward the step portion 320 of the cap plate 300 and overlaps the step portion 320, such that a short circuit between the terminal plate 400 and the cap plate 300 having different polarities may be prevented or substantially prevented, welding between the case 200 and the cap plate 300 may be easily performed by the side welded portion 600, and interference between the side welded portion 600 and the bonding layer 500 and interference caused by the side welded portion 600 itself may be suppressed.

That is, a short circuit between the cap plate 300 and the terminal plate 400 is prevented or substantially prevented by the bonding layer 500, and the button cell 1002 in which interference between the side welded portion 600 performing welding between the case 200 and the cap plate 300 and the bonding layer 500 is suppressed and self-interference of the side welding portion 600 is suppressed is provided.

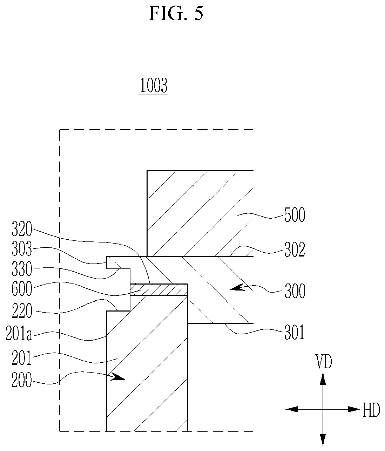

Herein, a button cell according to another embodiment will be described with reference to FIG. 5.

Herein, a button cell according to another embodiment will be described with respect to differences from the button cell according to the above-described embodiments.

FIG. 5 illustrates a cross-sectional view showing a portion of a button cell corresponding to the region "A" of FIG. 2, according to another embodiment.

Referring to FIG. 5, a case 200 of a button cell 1003 according to another embodiment includes a first welding groove 220.

The first welding groove 220 is recessed from the outer surface 201a of the sidewall 201 of the case 200 corresponding to the step portion 320 of the cap plate 300. The first welding groove 220 is recessed in the horizontal direction HD from the outer surface 201a of the sidewall 201 of the case 200.

The cap plate 300 of the button cell 1003 includes the step portion 320 and a second welding groove 330.

The second welding groove 330 is recessed from a surface of the edge 303 of the cap plate 300 corresponding to the step portion 320. The second welding groove 330 is recessed from the surface of the edge 303 of the cap plate 300 in the horizontal direction HD to communicate with the first welding groove 220 of the case 200. In a preferred embodiment, the second welding groove 330 has a shape that is symmetrical to the first welding groove 220, but the present disclosure is not limited thereto.

The side welded portion 600 is positioned inside the first welding groove 220 and the second welding groove 330. The side welded portion 600 welds between the step portion 320 of the cap plate 300 and the sidewall 201 of the case 200 inside the first welding groove 220 and the second welding groove 330.

The side welded portion 600 welding between the step portion 320 of the cap plate 300 and the sidewall 201 of the case 200 is positioned inside the first welding groove 220 of the case 200 recessed from the outer surface 201a of the sidewall 201 of the case 200 and the second welding groove 330 of the cap plate 300 recessed from the surface of the edge 303 of the cap plate 300, and, thus, during a side welding process, an area to be welded by the first welding groove 220 and the second welding groove 330 may be easily checked, such that welding between the case 200 and the cap plate 300 may be easily performed by the side welded portion 600, and even when the side welded portion 600 protrudes from inside of the first welding groove 220 and the second welding groove 330 by the welding process, external interference may be suppressed.

As described above, in the button cell 1003 according to an embodiment, the side welded portion 600 welding between the case 200 and the cap plate 300 is positioned inside the first welding groove 220 and the second welding groove 330 positioned at a side of the button cell 1003, and, thus, the bonding layer 500 protrudes from the terminal plate 400 toward the step portion 320 of the cap plate 300 and overlaps the step portion 320, such that a short circuit between the terminal plate 400 and the cap plate 300 having different polarities may be prevented or substantially prevented, welding between the case 200 and the cap plate 300 may be easily performed by the side welded portion 600, and interference between the side welded portion 600 and the bonding layer 500 and interference caused by the side welded portion 600 itself may be suppressed.

That is, a short circuit between the cap plate 300 and the terminal plate 400 is prevented or substantially prevented by the bonding layer 500, and the button cell 1003 in which interference between the side welded portion 600 performing welding between the case 200 and the cap plate 300 and the bonding layer 500 is suppressed and self-interference of the side welding portion 600 is suppressed is provided.

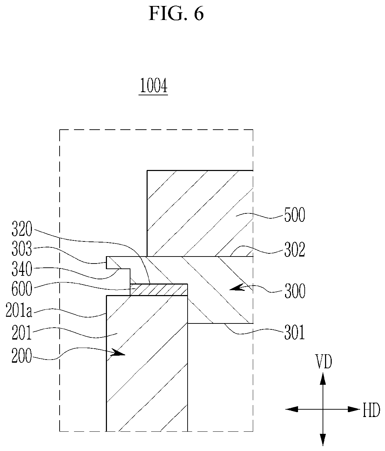

Herein, a button cell according to another embodiment will be described with reference to FIG. 6.

Herein, a button cell according to another embodiment will be described with respect to differences from the button cell according to the above-described embodiments.

FIG. 6 illustrates a cross-sectional view showing a portion of a button cell corresponding to the region "A" of FIG. 2, according to another embodiment.

Referring to FIG. 6, a cap plate 300 of a button cell 1004 according to another embodiment includes a step portion 320 and a third welding groove 340.

The third welding groove 340 is recessed from a surface of the edge 303 of the cap plate 300 corresponding to the step portion 320. The third welding groove 340 is depressed from a surface of the edge 303 of the cap plate 300 in the horizontal direction HD.

The side welded portion 600 is positioned inside the third welding groove 340. The side welded portion 600 welds between the step portion 320 of the cap plate 300 and the sidewall 201 of the case 200 inside the third welding groove 340.

The side welded portion 600 welding between the step portion 320 of the cap plate 300 and the sidewall 201 of the case 200 is positioned inside the third welding groove 340 of the cap plate 300 that is recessed from the surface of the edge 303 of the cap plate 300, and, thus, during a side welding process, an area to be welded by the third welding groove 340 may be easily checked, such that welding between the case 200 and the cap plate 300 may be easily performed at the side welded portion 600, and even when the side welded portion 600 protrudes from an inside of the third welding groove 340 by the welding process, external interference may be suppressed.

As described above, in the button cell 1004 according to an embodiment, the side welded portion 600 welding between the case 200 and the cap plate 300 is positioned inside the third welding groove 340 positioned at a side of the button cell 1004, and, thus, the bonding layer 500 protrudes from the terminal plate 400 toward the step portion 320 of the cap plate 300 and overlaps the step portion 320, such that a short circuit between the terminal plate 400 and the cap plate 300 having different polarities may be prevented or substantially prevented, welding between the case 200 and the cap plate 300 may be easily performed by the side welded portion 600, and interference between the side welded portion 600 and the bonding layer 500 and interference caused by the side welded portion 600 itself may be suppressed.

That is, a short circuit between the cap plate 300 and the terminal plate 400 is prevented or substantially prevented by the bonding layer 500, and the button cell 1004 in which interference between the side welded portion 600 performing welding between the case 200 and the cap plate 300 and the bonding layer 500 is suppressed and self-interference of the side welding portion 600 is suppressed is provided.

While this disclosure has been described in connection with what are presently considered to be some practical embodiments, it is to be understood that the disclosure is not limited to the disclosed embodiments, but, on the contrary, is intended to cover various modifications and equivalent arrangements included within the scope of the appended claims.

### REFERENCE SIGNS

- 1000, 1002, 1003, 1004: button cell
- 100: electrode assembly
- 110: first electrode
- 120: second electrode
- 130: separator
- 140: first electrode tab
- 150: second electrode tab
- 200: case
- 201: sidewall of the case
- 201a: outer surface of the sidewall
- 210: opening
- 220: first welding groove
- 300: cap plate
- 301: rear surface of the cap plate
- 302: front surface of the cap plate
- 303: edge of the cap plate
- 310: through hole
- 320: step portion of the cap plate
- 330: second welding groove
- 340: third welding groove
- 400: terminal plate
- 410: flange portion
- 420: protrusion
- 500: bonding layer
- 600: side welded portion

## Claims

1. A button cell comprising:
an electrode assembly (100) comprising a first electrode (110), a second electrode (120), a separator (130) positioned between the first electrode and the second electrode, a first electrode tab (140) extending from the first electrode, and a second electrode tab (150) extending from the second electrode;
a case (200) connected to the first electrode tab (140) and accommodating the electrode assembly (100) and comprising an opening (210) exposing the electrode assembly;
a cap plate (300) coupled to the case (200) to cover an outer region of the opening and comprising a through hole (310) exposing a central region of the opening (210), and a step portion (320) recessed to correspond to a sidewall of the case and in which the sidewall (201) of the case (200) is inserted;
a terminal plate (400) connected to the second electrode tab (150), insulatively bonded to the cap plate (300), and covering the through hole (310);
a bonding layer (500) between the cap plate (300) and the terminal plate (400) and insulatively bonding between the cap plate (300) and the terminal plate (400); and
a side welded portion (600) between the step portion (320) of the cap plate and the sidewall (201) of the case.

2. The button cell of claim 1, wherein the bonding layer (500) protrudes from the terminal plate (400) toward the step portion (320) of the cap plate.

3. The button cell of claims 1 or 2, wherein the bonding layer (500) overlaps the step portion (320).

4. The button cell according to any of the preceding claims, wherein the case (200) further comprises a first welding groove (220) recessed from an outer surface (201a) of the sidewall (201) corresponding to the step portion (320).

5. The button cell of claim 4, wherein the side welded portion (600) is positioned inside the first welding groove (220).

6. The button cell of claim 4, wherein the cap plate (300) further comprises a second welding groove (330) recessed from a surface of an edge (303) of the cap plate (300) corresponding to the step portion (320) to communicate with the first welding groove (220).

7. The button cell of claim 6, wherein the side welded portion (600) is positioned inside the first welding groove (220) and the second welding groove (330).

8. The button cell of claims 1 to 3, wherein the cap plate (300) further comprises a third welding groove (340) recessed from a surface of an edge (303) of the cap plate (300).

9. The button cell of claim 8, wherein the side welded portion (600) is positioned inside the third welding groove (340).

10. The button cell according to any of the preceding claims, wherein the step portion (320) is recessed from a rear surface (301) of the cap plate (300).

11. The button cell according to any of the preceding claims, wherein the bonding layer (500) is on a front surface (302) of the cap plate (300).

12. The button cell according to any of the preceding claims, wherein
the terminal plate (400) comprises:
a flange portion (410) covering the through hole (310) and contacting the bonding layer (500); and
a protrusion (420) extending through the through hole (310) from the flange portion (410) and connected to the second electrode tab (150).

13. The button cell of claim 12, wherein
the bonding layer (500) is in contact with the flange portion (410), and
the bonding layer (500) is not in contact with the protrusion (420).

14. The button cell according to any of the preceding claims, wherein
the case (200) and the cap plate (300) have a same polarity as that of the first electrode (110), and
the terminal plate (400) has a same polarity as that of the second electrode (120).

15. The button cell according to any of the preceding claims, wherein a ratio of a height to a diameter of the button cell is 1 or less.
